# EUROPEAN PATENT APPLICATION

(11) **EP 0 992 926 A2**
(43) Date of publication of application: **12.04.2000**
(21) Application number: 99307863.3
(22) Date of filing: 06.10.1999
(51) Int. Cl.: G06F 17/60

(54) **Distributed office system and management method thereof**

(30) Priority: 06.10.1998 JP 29760698; 05.10.1999 JP 28388599
(71) Applicant: CANON KABUSHIKI KAISHA, Tokyo (JP)
(72) Inventor: Sakakibara, Ken, Ohta-ku, Tokyo (JP); Kimura, Toshihiro, Ohta-ku, Tokyo (JP); Tadokoro, Yoshihisa, Ohta-ku, Tokyo (JP); Kato, Masami, Ohta-ku, Tokyo (JP)
(74) Representative: Beresford, Keith Denis Lewis

(57) **Abstract**

Conventional apparatuses and communication application software are not developed to support distributed working, but are developed on the premise of the office and working mode of aggregate working, and it is therefore difficult to use them for an efficient distributed working. Moreover, in the distributed working in which the apparatuses and communication application software are disposed in a conventional home office, working efficiency is deteriorated, and as an additional problem, the amount of communications itself is decreased. Therefore, an object of the present invention is to provide a distributed office system and a method of managing the system, in which a plurality of user terminal devices installed in different places, and usually one host server device are connected via a communication network, so that a plurality of offices distributed in the different places can entirely function as one office space.

## Description

### BACKGROUND OF THE INVENTION

### Field of the Invention

The present invention relates to a distributed office system and a method of managing the system, in which for example, a plurality of user terminal devices and one host server device are connected via a communication network, and a virtual office space which has the same effect as that of an established office space is constructed on the network, so that even a group of workers distributed in remote places can work while maintaining an excellent in-group communication and utilizing a team work, and in which even when geographically distributed working is continued for a long time, no sense of alienation or isolation is caused among members, and an excellent management can be performed while maintaining a certain degree of tense sense as an organization body and a sense of unity as the group.

### Related Background Art

In conventional organization bodies such as companies, corporations, and public institutions, it is general to secure an office space as their own real property or by a lease contract, which is a work place of employees (hereinafter referred to as workers) engaged in clerical work, trading work and technical work requiring no large equipment. The workers usually utilize public transport facilities or their own cars to arrive at and gather in the office space by a work start time to perform aggregate working during predetermined working time. Then, the office space is equipped with telephone sets, copying machines, facsimile machines, computers, and a computer network to attain various efficient businesses.

The custom of aggregate working is a remarkably new phenomenon employed for an efficient factory operating at and after the Industrial Revolution in human history. In recent years, problems attributed to the aggregate working such as commuting hell and air pollution by the increase of private cars have been remarkable. Additionally, since communication infrastructures such as Internet and various communication techniques can be utilized, the aggregate working is not necessarily a necessary working mode for the organization and the workers. Rather, an idea of distributed working has been noted, in which the workers belonging to the same organization body are allowed to work in their own homes and other desired places in order to accomplish the entire target business of the organization.

Generally in the organization bodies such as companies, in order to implement the distributed working, it is usual to use a room of each worker's home as a working space (OFFICE (HOME)), connect a plurality of home offices distributed in remote places via a communication channel and use home communication terminal apparatuses such as telephone sets and facsimile machines and communication application software to perform necessary communication among the workers. As the communication channel, subscriber telephone network, ISDN network, Internet exclusive channel, and the like are used, and as a communication application system, an electronic mail system, World Wide Web (WWW) system, a television conference system, and the like are used.

Moreover, in some cases, instead of the home offices, the workers use satellite offices, or tele-cottages prepared by the belonging organization or local self-governing bodies. Furthermore, for the trading or maintenance work, the seats of the private cars or the public transportation facilities for use in visiting clients are used as temporary working places (OFFICE (MOBIL)).

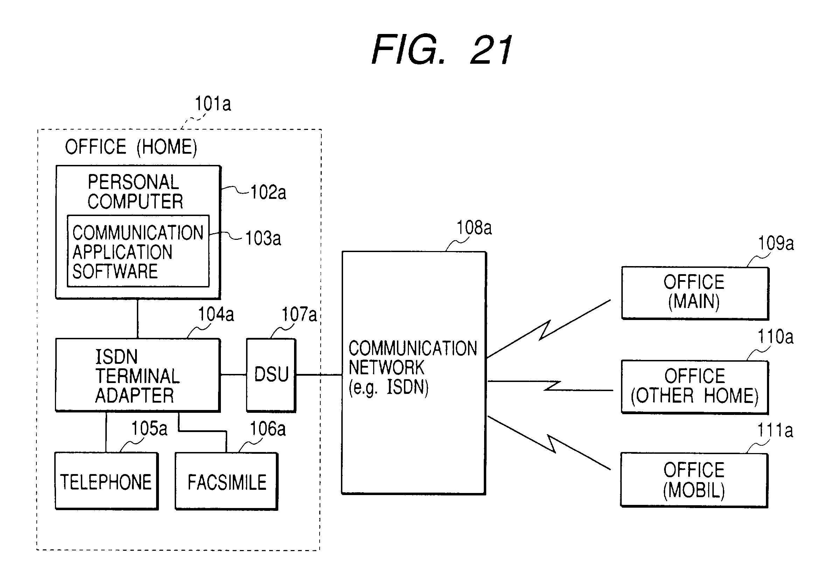

Fig. 21 is a block diagram showing the conventional configuration of a home office. A home office 101a is usually a room of a worker's home or a partial space thereof, in which a personal computer 102a, a telephone set 105a, a facsimile transmitter/receiver 106a, ISDN terminal adapter 104a, DSU (channel terminal end device) 107a, and the like are installed.

In this case, the personal computer 102a is connected to the data port of the ISDN terminal adapter 104a via its serial communication port, and the telephone set 105a and the facsimile transmitter/receiver 106a are connected to the analog ports of the ISDN terminal adapter 104a.

The ISDN terminal adapter 104a is connected to an ISDN subscriber network 108a via the DSU 107a, and the channel network is utilized to perform communication with an office (main) 109a, an office (other home) 110a or an office (mobil) 111a.

Instead of the ISDN subscriber network, a general subscriber telephone network can be used. In this case, instead of the ISDN terminal adapter, a modem (modulation/demodulation device) is used to connect the personal computer to the channel network. The telephone set or the facsimile transmitter/receiver is connected to the general subscriber telephone network using a separate general subscriber telephone channel, or to the same general subscriber telephone network as that of the modem (modulation/demodulation device) using a channel change-over device, and the like. Instead of using the telephone set and the facsimile transmitter/receiver as separate products, the telephone set incorporating a facsimile function is frequently used.

In the personal computer 102a, a communication application software 103a is installed beforehand, and used for the communication with the main office, the other home office or the mobile office.

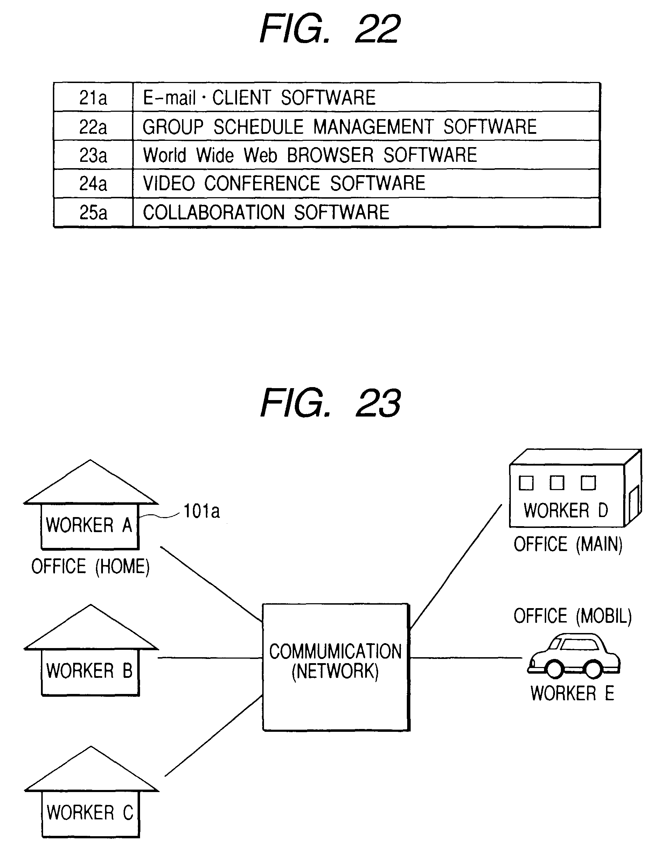

Fig. 22 is a diagram showing a table of various communication applications. An E-mail/client software 21a is used for exchanging electronic mails with other workers in OFFICE (MAIN), OFFICE (OTHER HOME) or OFFICE (MOBIL), so that the preparation, transmission or reception, and reading of the electronic mails are realized. A group schedule management software 22a makes possible the registration/confirmation of the working schedule of the worker himself or the confirmation of the working schedule of the other workers. A World Wide Web browser software 23a makes possible the perusing of a home page prepared mainly by the organization to which the worker belongs, a notice board for organization members placed in the home page, and the like.

By a video conference software 24a it is possible to perform consultations or conferences by exchanging voice or image with the other workers, or to perform conferences by using the communication channel instead of actually going out/moving to other places.

A collaboration software 25a is a software for opening a shared white board or the same application software on the display of the personal computer with the other worker to perform a group work thereon, and is included in the video conference software 24a in some cases.

As described above, when the worker belonging to the organization works in the home office, it has heretofore been usual to use the telephone set, the facsimile transmitter/receiver, the personal computer and each installed communication application software to proceed the working while communicating with the other workers.

However, the apparatuses and each communication application software which have been heretofore used are not originally developed to support the distributed working, but are developed by making much of general-purpose properties, or are developed on the premise of the office and working mode of the aggregate working. Therefore, it is difficult to use them for an efficient distributed working. Particularly, it is impossible to implement the distributed working while maintaining the mode and quantity of in-organization communication which can be attained in the conventional aggregate working. Therefore, the prevalence itself of the distributed working is not advanced, and especially there is a problem that it is difficult to shift from the aggregate working to the distributed working.

The problem with the use of the conventional apparatus and software will be described hereinafter. Fig. 23 schematically shows an office configuration in which five workers perform the distributed working in a department constituted by the five workers as one department of the organization body such as the company. Among the five workers, three workers A, B, C are working in OFFICE (HOME) 101a, worker D is working in OFFICE (MAIN), and worker E is working in OFFICE (MOBIL).

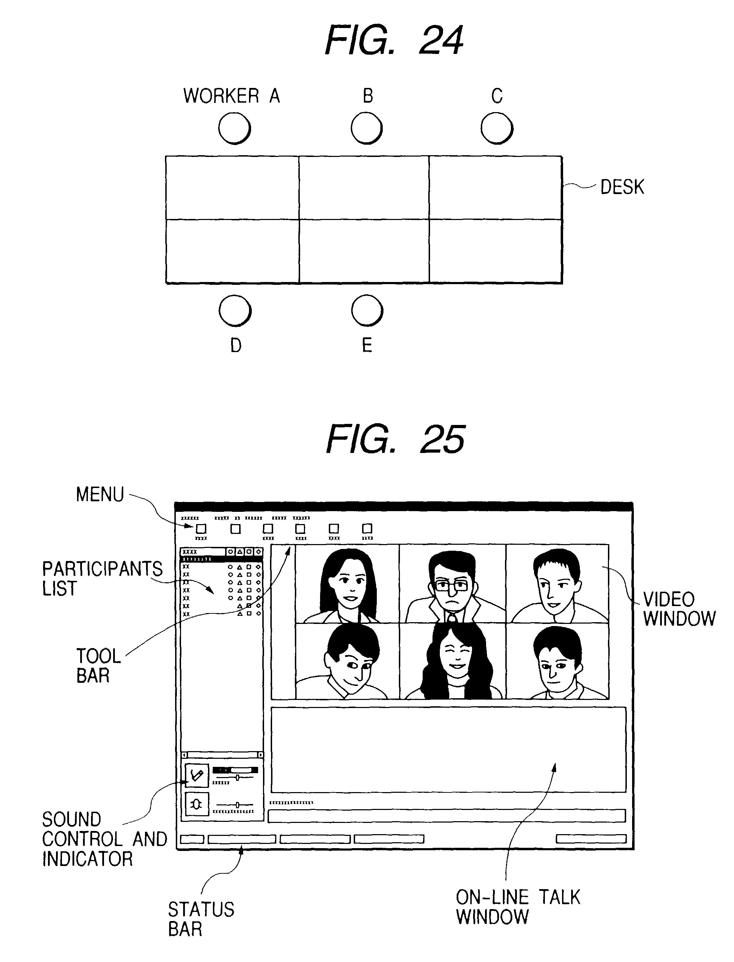

In the organization, the working mode before starting the distributed working is the aggregate working. Fig. 24 shows the aggregate working as the working mode before the workers start the distributed working as shown in Fig. 23. Office desks are arranged for working in the same office.

For example, since the worker A easily sees the situation of the worker B visually and aurally, the worker A understands a sign that the worker B is not very busy, and can judge an appropriate timing to talk to the worker B.

On the other hand, in the distributed working shown in Fig. 23, an action of making questions itself can be performed by using the telephone set or the video conference software out of various apparatuses and communication application software shown in Figs. 21 and 22. However, when the worker A uses the telephone or the video conference software to call the worker B, the worker A cannot confirm the situation of the worker B before calling. For example, when the worker B answers another telephone to talk or moves to a living room inside the same home from the home office to take a rest, no response is obtained as a result. Therefore, the operation of calling the worker B by the worker A itself is wasteful, thereby causing a problem of deteriorating the working efficiency.

In this case, the worker A can send questions to the worker B via the electronic mail using the E-mail/client software. In this method, however, for the question requiring an immediate answer, since it is uncertain when the worker B can answer, difficulty is generated in the working plan of the worker A.

The worker A can use the group schedule management software 22a to confirm the schedule of the worker B, but the content registered in this type of group schedule management software is usually limited to an action plan or an operation schedule in units of one hour. A rest time, and other details are not inputted. Moreover, the operation schedule is merely inputted, and it does not necessarily reflect the actual worker's present situation. Therefore, a problem is that when a call is suddenly made with the telephone or the video conference on an urgent matter as described above, the software cannot be means for confirming the other worker's situation or for judging the time to receive a reply for the electronic mail.

To solve the problem, one proposed conventional method comprises using the video conference software operating on the worker's personal computer to connect images of a plurality of workers, continuing the connection during the working time, and mutually checking working situation images.

As an example, the use of Enhanced CU-SeMe and Reflector (server software for Enhanced CU-SeeMe) developed/sold by White Pine Software Inc. in the U.S. will be described. Fig. 25 shows the screen of the worker's personal computer. As shown in Fig. 25, since the other worker images are continuously displayed not only during the conference but also during other working hours, it can be confirmed based on the display, for example, whether or not the other workers are in the home offices, or whether or not the other workers are on the telephone.

However, only worker names, worker images and system operation information (whether or not the image is received, frame rate, communication speed, and the like) are displayed on the screen. For example, when the worker is not in the image, working situations cannot be judged such as whether or not the worker takes a holiday and cannot communicate within the day, whether or not the worker temporarily takes a rest and comes back soon, and whether or not the worker is going out for business purposes.

Moreover, the image and user's name displayed on the screen are displayed based on a standard system of a general personal computer GUI (graphic user interface). Since no diagram image of a single-room office is included, or no application to the organization body is performed, a virtual office space cannot be functioned. The sense of unity in the organization necessary for a plurality of workers to perform the distributed working continuously for a long time cannot be produced, and the sense of isolation or alienation of each worker cannot be eliminated.

A particularly large problem is that in the conventional example shown in Fig. 25 in which the other worker images are displayed on the image of the worker's personal computer, when the worker image to be displayed is selected, or the display position of the image on the screen or the size of the image to be displayed is set, the worker using the personal computer has to use the user interface of the video conference software to perform the setting by himself. Specifically, the worker needs to determine the worker image to be displayed on the screen, input IP address of the selected worker's personal computer, directory information sent from a multi-point connecting server and other address information to perform connecting operation, and perform an operation to arrange a plurality of resulting displayed worker images in an appropriate size and order on the screen.

However, the operation is known to be considerably complicated for the worker. Moreover, in the conventional example, the other workers whose images are displayed on this worker's personal computer screen do not know the screens on which their working images are displayed, or the positions and sizes of their working images displayed on the screens, and this easily leads to an uncertainty as to an invasion of privacy. The problem has been pointed out.

Furthermore, although the plurality of workers belong to the same company or group, in the conventional example, the display positions of the other worker images displayed on the screen differ with the workers. As a result, a psychological sense for sharing the virtual office space among the members and utilizing a distributed office system cannot be obtained.

Moreover, in the above-described example, when the worker A makes a telephone call to the worker B, the call is made using a general subscriber telephone channel or ISDN channel connected to the home office of the worker A. In the general home office, however, the channel is also used as a channel for household use. In this case, a telephone communication fee is charged to the home. For example, the worker may obtain a bill from a communication company, divide and total the communication fees for household use and for business use, and ask for the payment only of the communication fee for business purpose from the organization as an employer. However, the operation itself is complicated, which increases operation time, and which causes a problem of deteriorating the efficiency of the original working.

As described above, when the apparatuses and communication application software disposed in the conventional home office are merely used, a smooth communication as in the aggregate working is impossible, and the working efficiency is deteriorated. Additionally, as a result, there arises a problem that the workers hesitate to exchange communications and the amount of communications itself is decreased. The decrease of the amount of communications necessarily produces a trouble in the sense of unity in the organization, and the workers come to feel the sense of isolation or alienation, which is a large problem in performing the distributed working.

### SUMMARY OF THE INVENTION

Wherefore, the present invention has been developed in consideration of the problems, and an object thereof is to provide a distributed office system and a method of managing the system, in which a plurality of user terminal devices installed in different places, and usually one host server device are connected via a communication network, working can be performed while maintaining smooth communications among geographically distributed workers, and as a result a plurality of offices (including home offices, mobile offices, main offices, satellite offices, and the like) distributed in the different places can entirely function as one office space.

According to the present
invention, there is provided a distributed office system provided with terminal devices installed for a plurality of users, and a server device connected to the terminal devices via a communication channel, for displaying information on a screen of a terminal device of each of the users, the information relating to the other users of said each user, comprising working situation display means for collectively displaying an aggregate of at least three types of information including other user working situation images,
character information concerning other user working situations, and diagram images indicating other user virtual single-room offices as the information concerning the other users on the screen of the terminal device of the user.

Moreover, according to the present invention, there is provided a method of managing a distributed office system provided with terminal devices installed for a plurality of users, and a server device connected to the terminal devices via a communication channel for displaying information concerning other users on a screen of the terminal device of the user in the distributed office system, comprising collectively displaying an aggregate of at least three types of information including other user working situation images, character information concerning other user working situations, and diagram images indicating other user virtual single-room offices as the information concerning the other users on the screen of the terminal device of the user.

### BRIEF DESCRIPTION OF THE DRAWINGS

Fig. 1 is a diagram showing the configuration of a distributed office system.

Fig. 2 is a diagram showing the hardware configuration of a host server device 11.

Fig. 3 is a diagram showing the software configuration of the host server device 11.

Fig. 4 is a diagram showing the hardware configuration of user terminal devices 13, 15.

Fig. 5 is a diagram showing that the apparatuses shown in Fig. 4 are actually installed in a home office where a user is working.

Fig. 6 is a diagram showing the configuration of a user terminal device software.

Fig. 7 is a diagram showing a part of a user terminal device screen.

Fig. 8 is a diagram showing the outline of information stored in a database part 53 as a table.

Fig. 9 is a diagram showing a control box.

Fig. 10 is a diagram showing a message input dialog.

Fig. 11 is a diagram showing an organization body comprising a plurality of departments to which the distributed office system is applied.

Fig. 12 is a diagram showing a dialog box displayed when the user designates an area for displaying other user single-room offices.

Fig. 13 is a diagram showing a screen (personal view A) displayed on the screen of the user terminal device of a visitor.

Fig. 14 is a diagram showing a screen (personal view B) displayed on the screen of the user terminal device of a worker having the visitor.

Fig. 15 is a diagram showing that the display of the working situation image is stopped and a blind image as a still image is displayed.

Fig. 16 is a diagram showing a screen display of a portable information terminal 24.

Fig. 17 is a diagram showing the content of a second dial tone voice.

Fig. 18 is a diagram showing a display example on the screen of the user terminal device when entering a meeting room.

Fig. 19 is a diagram showing a display example on the screen of the user terminal device when entering a training room.

Fig. 20 is a diagram showing a display example on the screen of the user terminal device when entering a lounge.

Fig. 21 is a block diagram showing a conventional home office configuration.

Fig. 22 is a diagram showing various communication applications as a table.

Fig. 23 is a schematic diagram showing the constitution of an office in which five workers perform distributed working in a department constituted by the five workers as one department of the organization body such as a company.

Fig. 24 is a diagram showing an aggregate working as a working mode before the workers shown in Fig. 23 start the distributed working.

Fig. 25 is a diagram showing a worker's personal computer screen.

### DETAILED DESCRIPTION OF THE PREFERRED EMBODIMENTS

Embodiments of a distributed office system and a method of managing the system according to the present invention will be described. In the distributed office system of an embodiment, a plurality of user terminal devices are simultaneously connected to a host server device via a communication network, so that various functions are realized as the distributed office system, and as a result, the distributed office is operated.

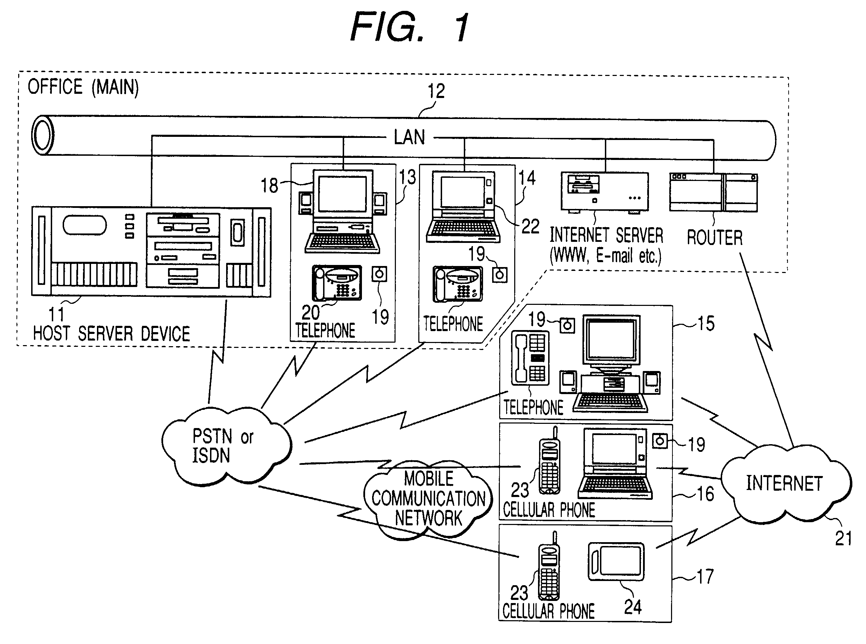

Fig. 1 is a diagram showing the constitution of the distributed office system. In Fig. 1, a host server device 11 is installed in a main office (such as head offices of various organization bodies such as companies introducing the distributed offices), and connected to Local Area Network (LAN) 12 in the main office.

In the embodiment, each of user terminal devices 13 or 14 for workers working in the main office is realized by combining three types of apparatuses of a personal computer 18, user terminal device software 19, and telephone 20, and other apparatuses. Specifically, the telephone 20 is connected to the host server device 11 via PSTN channel (general subscriber telephone channel) or ISDN channel, and the personal computer 18 is connected to the host server device 11 via the LAN 12.

In the embodiment, a user terminal device 15 for a user working in a home office is realized by combining three types of apparatuses of the personal computer 18, user terminal device software 19, and telephone 20, and other apparatuses in the same manner as the user terminal device 13. Specifically, the telephone 20 is connected to the host server device 11 via PSTN channel (general subscriber telephone channel) or ISDN channel, and the personal computer 18 is connected to the host server device 11 via Internet 21.

In the embodiment, a portable user terminal device 16 for a user working in a mobile office is realized by combining three types of apparatuses of a portable personal computer 22, user terminal device software 19, and cellular phone 23, and other apparatuses in the same manner as the user terminal device 14.
Specifically, the cellular phone 23 is connected to the host server device 11 via a mobile communication network and PSTN channel (general subscriber telephone channel) or ISDN channel, and the personal computer 22 is connected to the host server device 11 via Internet 21.

Another portable user terminal device 17 for the user working in the mobile office is used by combining two types of apparatuses of a general-purpose portable information terminal (incorporating World Wide Web browser) 24 and cellular phone 23. Specifically, the cellular phone 23 is connected to the host server device 11 via the mobile communication network and PSTN channel (general subscriber telephone channel) or ISDN channel, and the portable information terminal (incorporating the World Wide Web browser) 24 is connected to the host server device 11 via Internet 21.

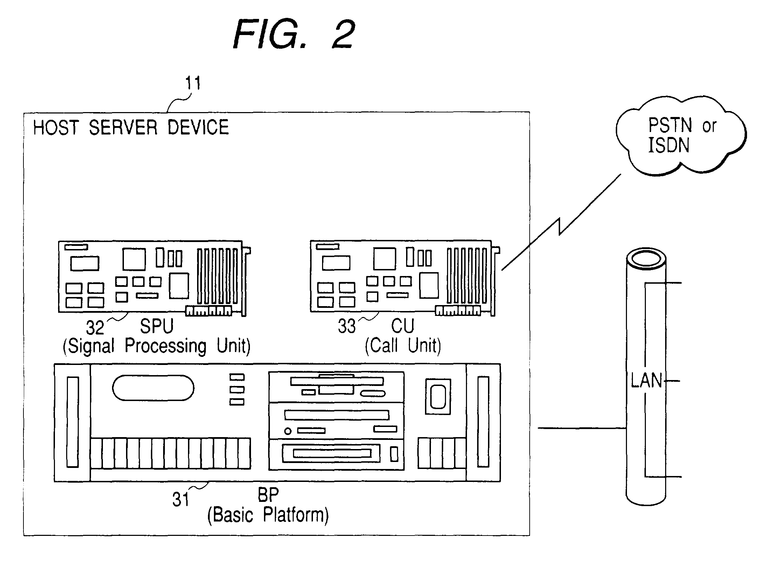

Fig. 2 is a diagram showing the hardware configuration of the host server device 11. A basic platform (BP) 31 is a PC server device, a signal processing unit (SPU) 32 is a parallel digital signal processor (DSP) signal processing board, and a call unit (CU) 33 is a telephone channel board (Computer Telephony Board). While the BP 31 is connected to the LAN in the main office via LAN network board, the CU 33 is connected to PSTN or ISDN channel.

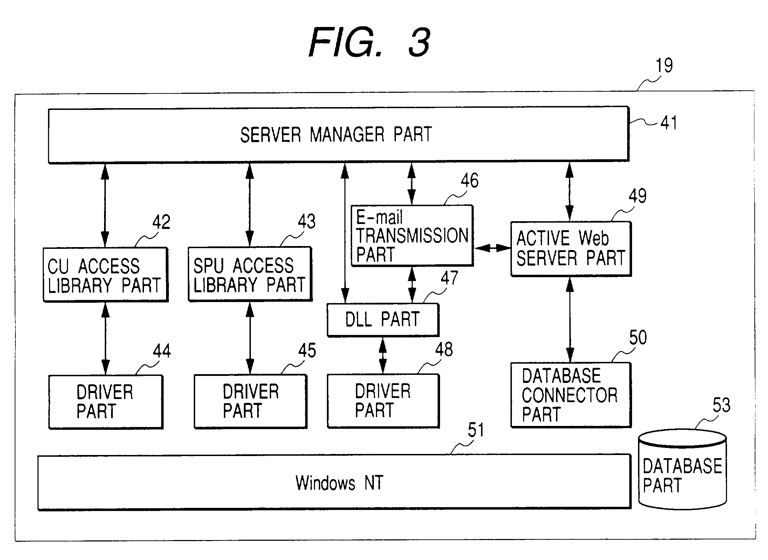

Fig. 3 is a diagram showing the software configuration of the host server device 11. The software included in the host server device 11 includes a software program developed using C++ language, and the like, and the existing software program, and employs Windows NT (the registered trademark of Microsoft Co., Ltd. in the U.S.) as an operating system (OS). In the drawing, the software is constituted of a server manager part 41, CU access library part 42, SPU access library part 43, driver parts 44, 45, 48, E-mail transmission part 46, dynamic link library (DLL) part 47, active Web server part 49, database connector part 50, Windows NT (registered trademark of Microsoft Co., Ltd. in the U.S.) 51, and database part 53.

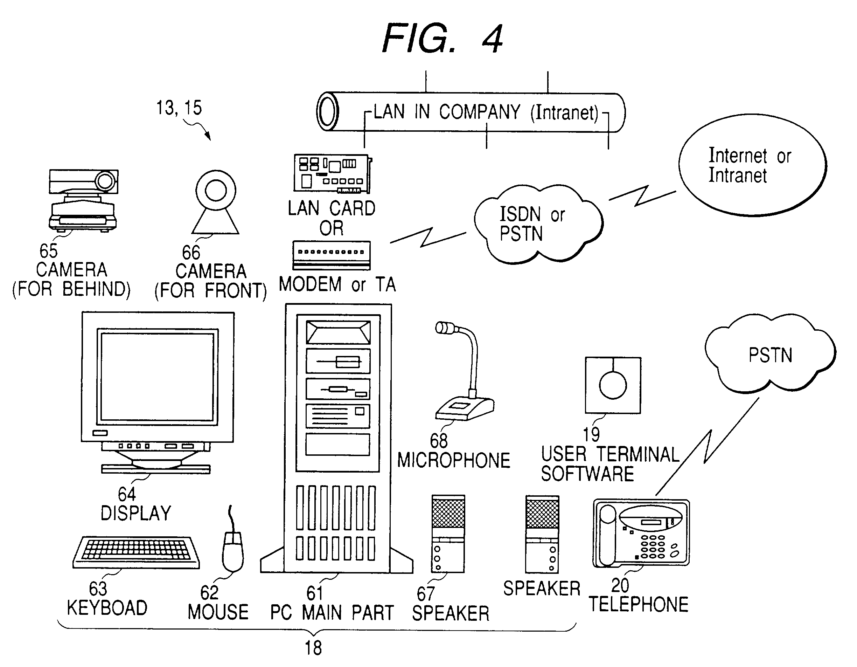

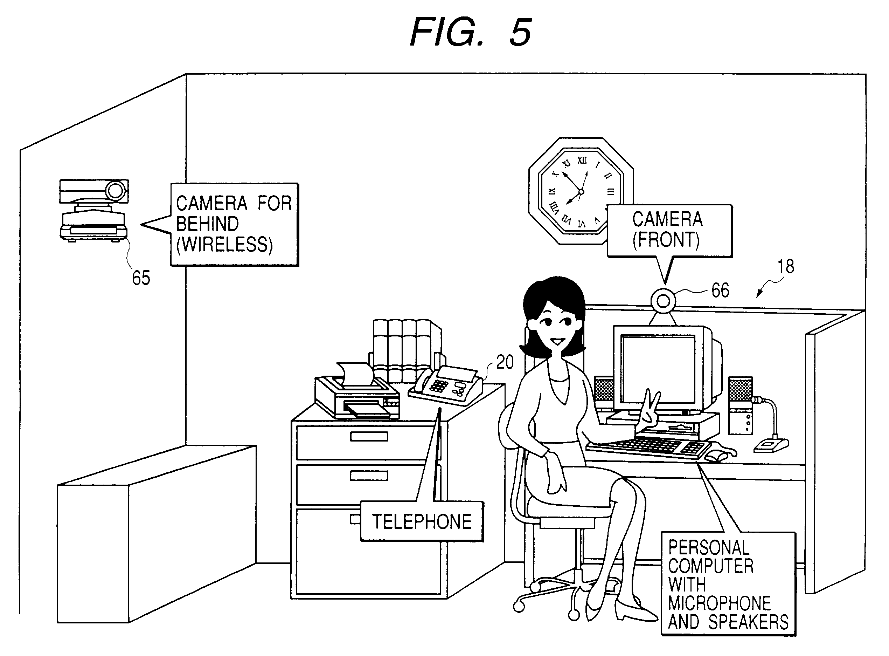

Fig. 4 is a diagram showing the hardware configuration of the user terminal devices 13, 15. The user terminal device is mainly constituted of three types of apparatuses: the personal computer 18; the terminal device software 19; and the telephone 20. In addition to these apparatuses, two types (for behind and front) of video cameras 65, 66 are connected to video input terminals disposed on a personal computer body 61. However, in some cases, either one of the video cameras is connected. Moreover, a display 64, keyboard 63, mouse 62, speaker 67, microphone 68, and the like are connected to corresponding apparatus input/output terminals disposed on the personal computer body 61. Fig. 5 is a diagram showing that the apparatuses shown in Fig. 4 are actually installed in the home office in which the user is working.

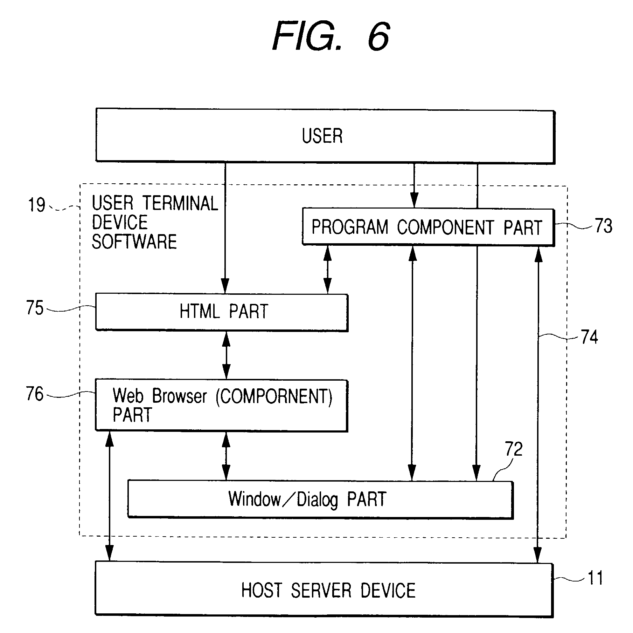

Fig. 6 is a diagram showing the configuration of the user terminal device software. The user terminal device software includes the software program developed using C++ language, and the like, and the existing software program, and employs Windows 95 (the registered trademark of Microsoft Co., Ltd. in the U.S.) as the operating system (OS). In the drawing, the software is constituted of a Window/Dialog part 72, program component part 73, signal conductor 74, HTML part 75, and Web Browser (component) part 76.

The operations of various functions in the distributed office system will next be described. To simplify the description, it is assumed that the users already use their user terminal devices to complete the connection to the host server device and start working.

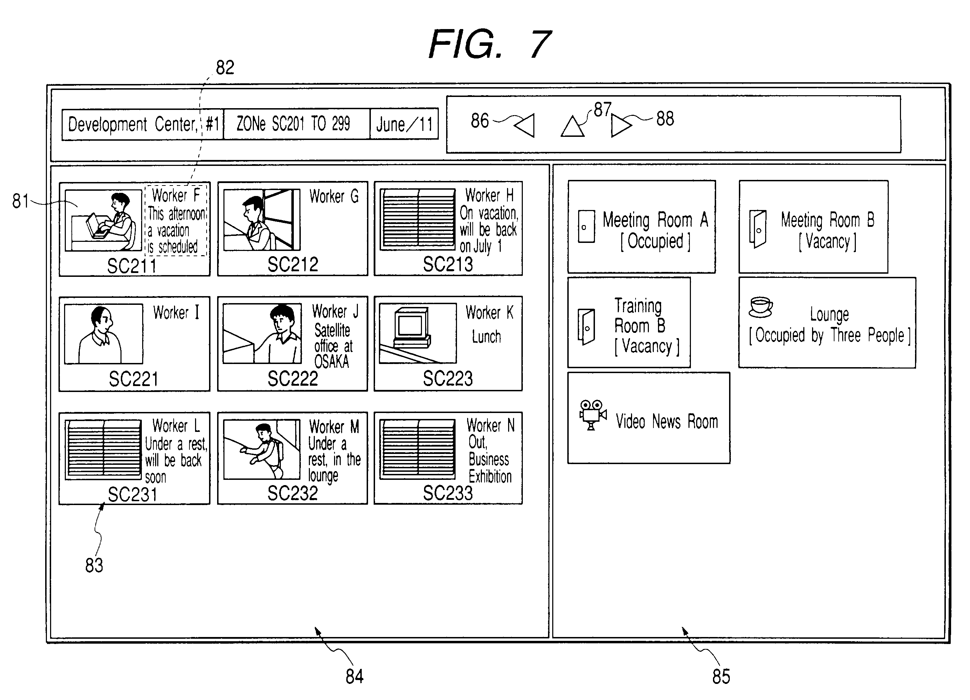

Fig. 7 is a diagram showing a part of a user terminal device screen. Numeral 81 denotes an image showing the other user working situation, 82 denotes a working situation data display section in which character information is displayed as the user's working situation data, and 83 denotes a diagram image indicating a user's virtual single-room office space. These three are combined to form the user's virtual single-room office.

Additionally, in the embodiment, nine single-room offices are displayed on the same screen, but the number of single-room offices may be more or less than nine. Then, an entire display space 84 is a single-room office area (virtual office area). Moreover, a blank space between the single-room office and the adjacent single-room office shows a virtual corridor part.

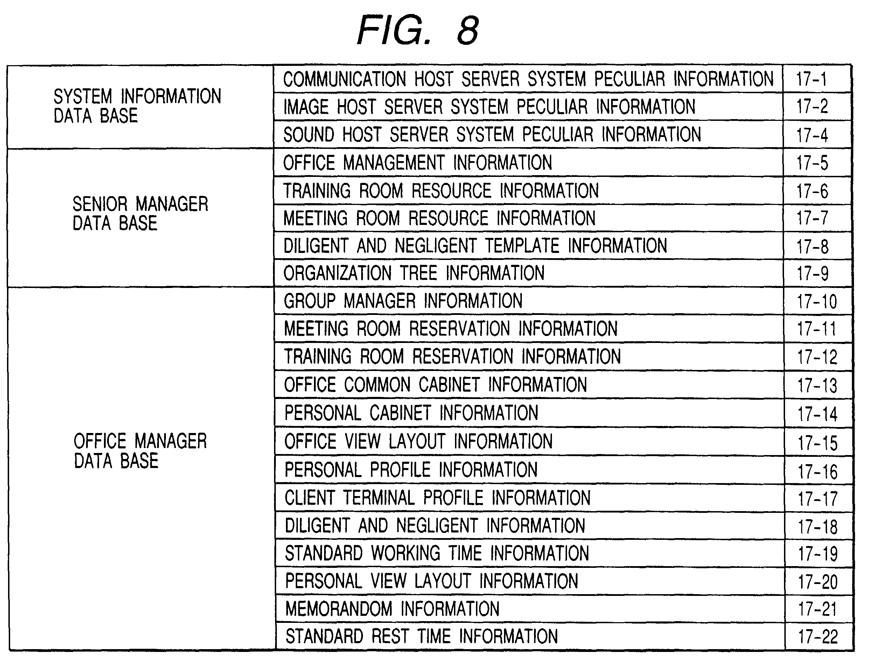

The host server device of the embodiment usually performs control so that a plurality of single-room office areas can exist, but only one single-room office area is usually displayed on the screen of the user terminal device of a specific user. In this case, the single-room office area which the specific users' single-room offices belong to/are arranged in, and the positions of the single-room offices in the single-room office area are predetermined by office view layout information 17-15 of an office manager database in Fig. 8.

Therefore, the users of the single-room offices belonging to the specific single-room office area and the arrangement on the display screen (vertical and horizontal positions, shown with arrangement/position numbers such as SC211, SC212 in Fig. 7) belong to the single-room office area, and are completely the same for all the users when the area is shown on the screen of the user terminal device. Specifically, when the same single-room office area is displayed, all the users see the screen of the same content in the same timing. By realizing what you see is what I see, a psychological sense that we are coworkers to share the same virtual office can be obtained among the users. Additionally, in the case where a plurality of users belonging to the same single-room office area have conversations concerning a method of using the user terminal device and other display contents of the single-room office area, since they look at the screen of the same display content, a smooth conversation can be performed.

Moreover, for the operation from when the user terminal device is connected to the host server device until the single-room office area is displayed on the screen, each user only has to start the user terminal device software 19 in the personal computer 18 and input ID and password. It is completely unnecessary for the user to select the belonging single-room office area, or to select the other users whose single-room offices are to be displayed on the screen of the user's user terminal device. Therefore, a very simple connecting operation is realized.

Furthermore, in the embodiment, only the specific user entitled to be the office manager can set and change the office view layout information 17-15 of Fig. 8, and general users cannot set or change the information, but this produces a merit for the organization such as the company which has or utilizes the host server device that operation can be performed so as to realize an excellent organization management applied to the organization body. Specifically, the company utilizing the distributed office system as in the embodiment is usually constituted of executives as employers and managers and workers as employees. In order to maintain an excellent relationship between them while performing a company management,
organization administration is usually performed based on an organization system and a position/class system, and department organizations and workers belonging to departments are determined based on the systems. Therefore, even in the distributed office system according to the present invention, the single-room office area to which the user is to belong, and further the positional relation of the single-room offices of a plurality of users belonging to the same single-room office area are matters to be determined by the manager of the company to which the user belongs. If the general users can operate to change the matters at will, there is a high probability that the organization administration is hindered. In the embodiment, since only the specific user entitled to set/change the office manager database can determine the single-room office area to which the user belongs and the position as described above, operation can be performed to realize the excellent organization management applied to the organization.

The user's working situation image 81 displayed as a part of the single-room office is an image photographed by the camera for behind 65 or the camera for front 66 disposed on the user terminal device used by the user. The image processing operation will be described.

The photographed image is inputted to the personal computer 18 from each camera via the video input terminal of the personal computer body 61, compressed/encoded as the compressed image of QCIF format (176 × 144 pixels) by the image compression/transmission program component of the program component part 73, and quickly transferred to the host server device 11 via the signal conductor 74 (see Fig. 6).

Upon reception of the compressed image, the host server device 11 transfers the image to the SPU 32 by the software operations of the server manager part 41, SPU access library part 43 and driver part 45.

The SPU 32 uses a compressed image reduction processing function software program stored beforehand in the image processing function program storage section disposed in the SPU 32, performs an image processing to reduce the compressed image to the half in both vertical and transverse sizes, generates a reduced compressed image of 88 × 72 pixels, and transmits the reduced compressed image to all user terminal devices other than the user terminal device which has photographed the image, via the server manager part 41.

Each of the user terminal devices having received the reduced compressed image uses the image extension display program component of the program component part 73 to display the image on the screen as the working situation image of the single-room office.

As described above, since the reduced compressed image is prepared based on the original compressed image using the SPU 32 of the host server device 11, and transmitted to the other user terminal devices, the update frequency (frame rate) of each user working situation image displayed in the single-room office on the screen of each user terminal device is set to a high rate. Specifically, when no reduced compressed image preparation processing is performed in the SPU 32, the frame rate of the image displayed in the single-room office is, for example, 1 frame per second (fps), but can be raised to a high rate of about 4 fps by the reduced compressed image preparation processing. However, the actual frame rate is influenced by various factors such as the transmission speed of Internet for use.

Additionally, the frame rate can also be changed by the manual operation of the user terminal device. For example, since the frame rate of the other user working situation image displayed on the screen of the user terminal device is too fast, a certain user cannot be concentrated on work and feels other troubles in driving the work forward. Then, the user can change the frame rate, for example, to 1 fps, one frame per 10 seconds, or one frame per minute by the manual operation. In this case, when the frame rate information desired by the user is notified to the server manager part 41 of the host server device 11, the host server device 11 controls the frame rate of the image to be transmitted to the image extension display program component of the program component part 73 of the user terminal device based on the
information.

The processing operation of the character information in the user working situation data display section 82 will be described. Usually, when the user is doing the personal work in the home office, only the user's name is displayed in the section, and the information concerning the name is stored as the information concerning a user's appellation in the database part 53 of the host server device 11.

Fig. 8 is a diagram showing the outline of the information stored in the database part 53 as a table. The user's appellation is stored in personal profile information 17-16, and the information (string of characters) is displayed on the screen of the user terminal device by the user working situation data display program component included in the program component part 73 of the user terminal device from the database part 53 of the host server device 11 via the database connector part 50, active Web server part 49, and server manager part 41.

Furthermore, when the user desires to display the working situation data other than the name on all the user terminal devices by the manual operation, the user performs input operation from a control box displayed in a section other than the single-room office area display section on the screen of the user terminal device.

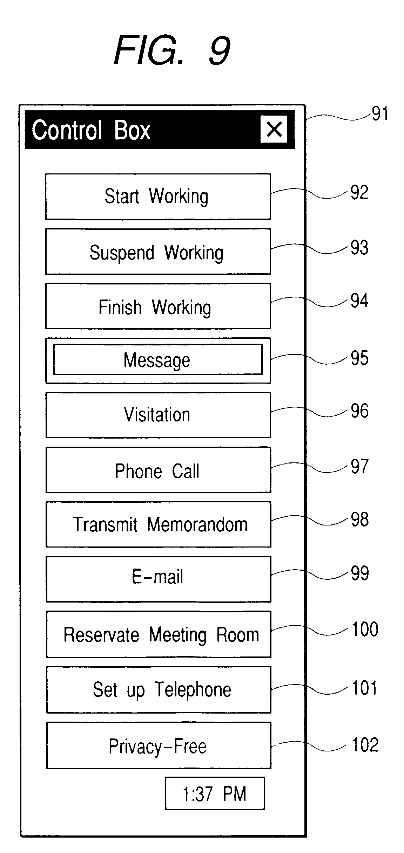

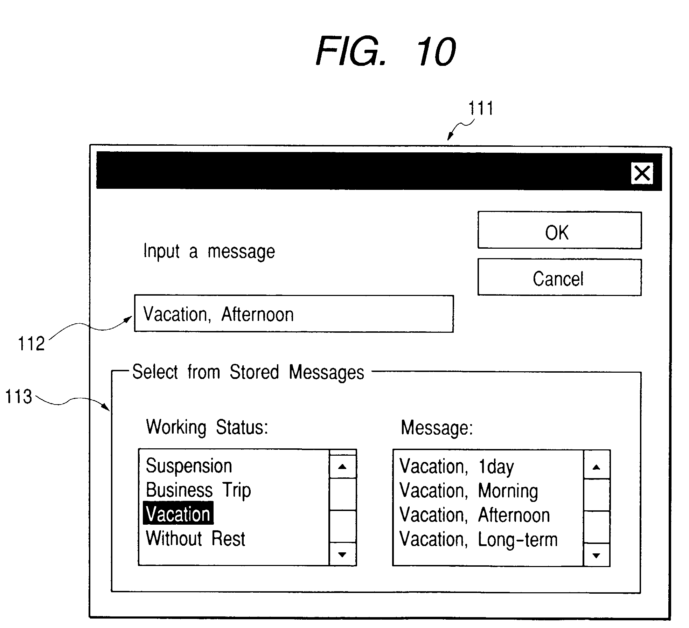

Fig. 9 is a diagram showing the control box. When the user points to a message button 95 included in a control box 91 with the mouse 62 disposed on the user terminal device, a message input dialog 111 shown in Fig. 10 is displayed on the user's screen. Fig. 10 is a diagram showing the message input dialog. The user inputs a desired message in a free message input area 112, or selects one prepared message from a stored message selection area 113.

These messages relate mainly to the present working place or the present situation (e.g., under a rest, going out, and other messages to be notified to the other users). The inputted or selected character information is transferred to the server manager part 41 of the host server device 11 from the Window/Dialog part 72 of the user terminal device software 19 via the server communication program component of the program component part 73.

The server manager part 41 records the character information to the database part 53. Additionally, the working situation data display program components in the program component parts 73 of all the other user terminal devices are immediately used to display the information on the working situation data display sections 82 as parts of the single-room office displays on the screens of the user terminal devices.

As described above, since the working situation images and character information concerning the working situations of the other workers belonging to the same department of the organization are displayed in the single-room office area on the screen of each user terminal device, the situation of the entire working place can be confirmed at a look.

Moreover, on the screen of the user terminal device, a common space area 85 is displayed next to the display of the single-room office area 84. In the common space area 85, images indicating a meeting room, a training room, a lounge, and a video news room, and images indicating doors to the rooms are displayed.

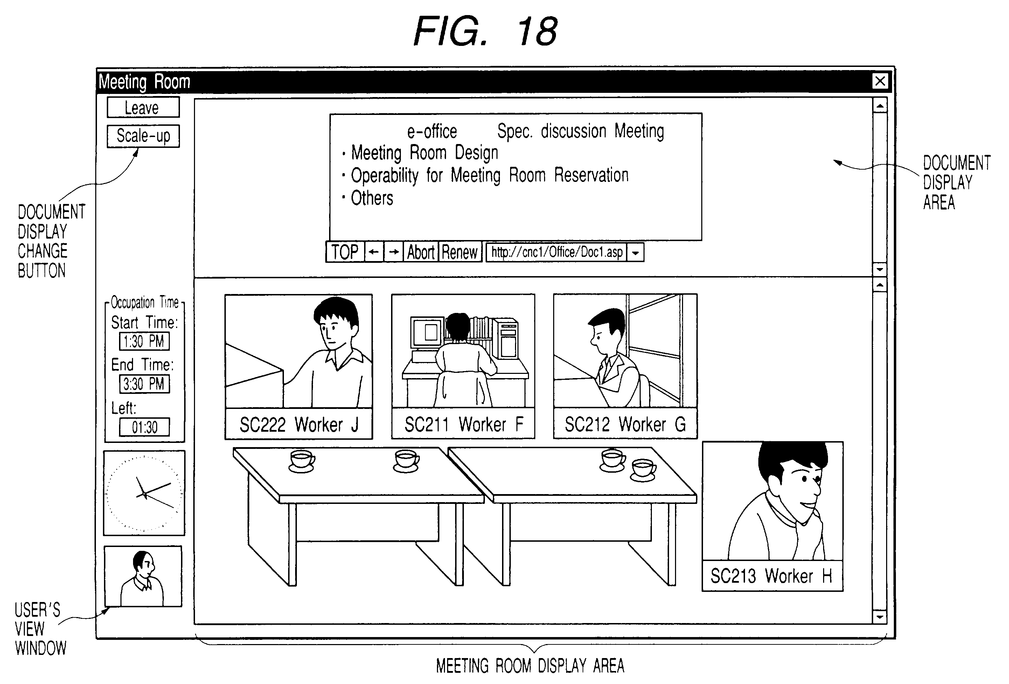

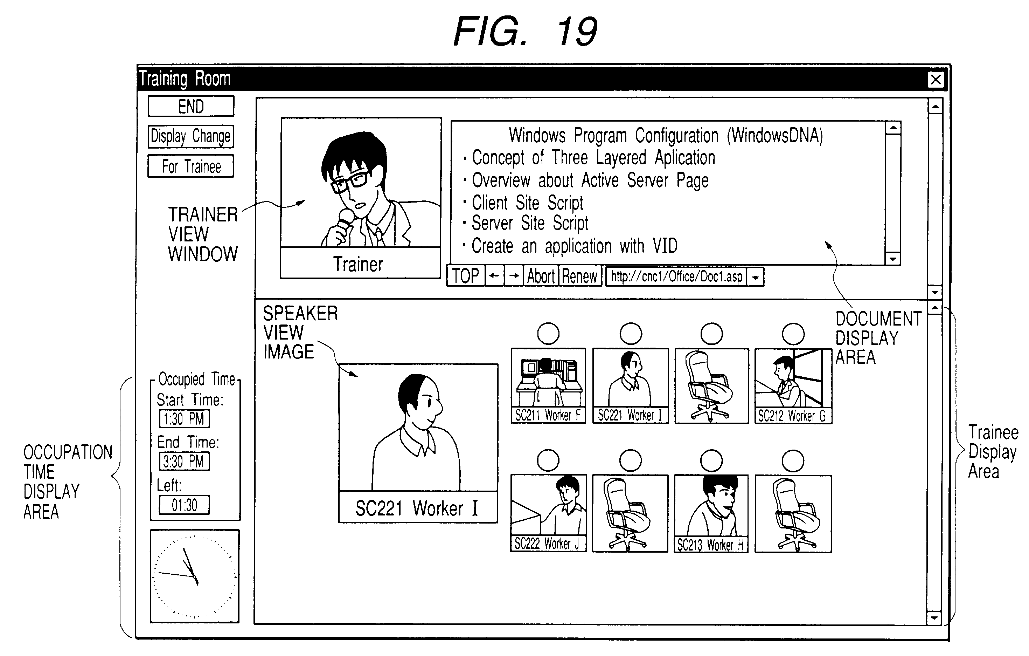

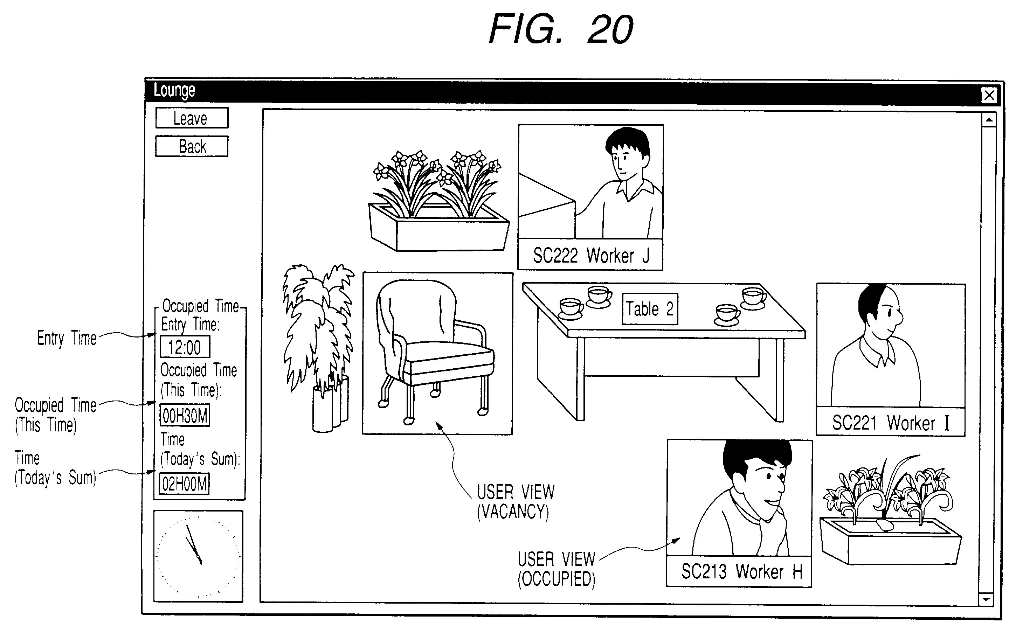

The user can enter each room in a virtual manner by designating the image on the screen. Fig. 18 shows a display example on the screen of the user terminal device when the user enters the meeting room.
Moreover, Fig. 19 shows a display example on the screen of the user terminal device when the user enters the training room. Fig. 20 shows a display example on the screen of the user terminal device when the user enters the lounge. Additionally, since these operations are the same as in the prior-art multi-point video conference system, and the like, the description is omitted.

Furthermore, the single-room office area 84 and the common space area 85 are usually displayed on one screen of the user terminal device at the same time. This indicates a virtual office space of one department in the organization. Here, the mode of the screen display is called the office view. In principle, the single-room offices displayed in the same office view belong to the users of the same department, but the relation between the department and the other department is as follows:

A certain department is constituted of a plurality of users, but there are usually a plurality of the departments, and the processing operation concerning the distributed office system of the plurality of departments can also be realized with the same host server device as long as the processing capability of the host server device is not exceeded.

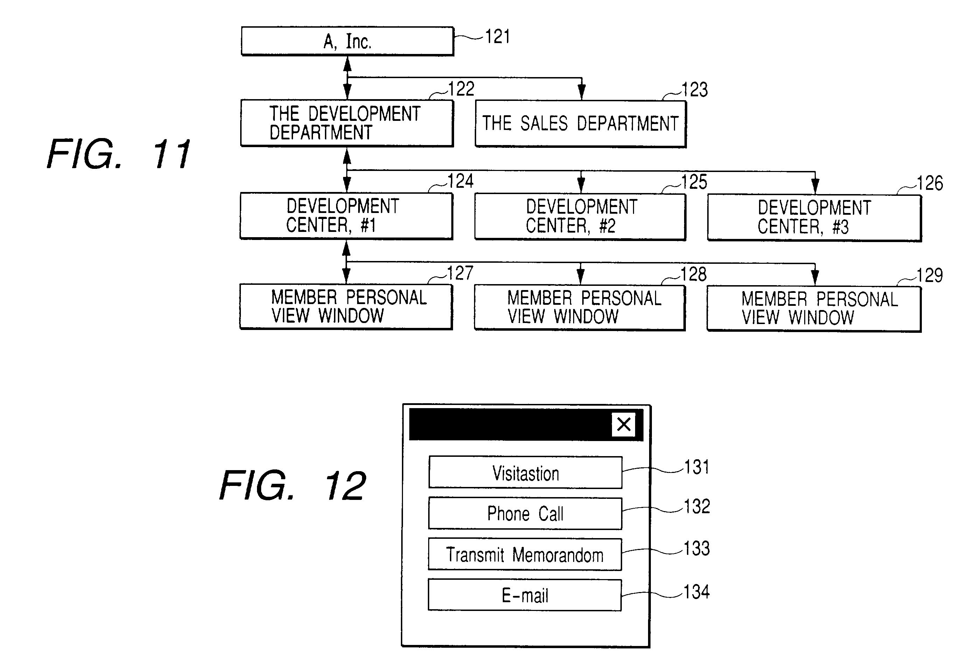

Fig. 11 is a diagram showing the organization body constituted of a plurality of departments to which the distributed office system is applied. A plurality of different departments 124 to 126 displayed in separate office view screens are arranged side by side in the same manner as in the constitution of an organization chart. By pointing to a left button 86 or a right button 88 on the office view screen (see Fig. 7), the office view of the adjacent department (separate department positioned adjacent on the organization chart of the organization body) can be viewed. Here, by displaying the organization body of Fig. 11 on the screen, pointing to the displayed different departments 124 to 126 with the mouse or the like, and moving to the office area of the pointed department (organization), the office area may be displayed on the screen.

Furthermore, by pointing to an upper button 87, the display is shifted to that of an upper class organization. The upper class organization is displayed as HTML document, and the content of the HTML document is mainly the introduction of the department. The document includes the organization chart and introductory document of each lower class department. By pointing to the document, the display can be shifted to that of the office view of the corresponding lower class department.

Furthermore, during the display of the office view, when the user points to the area to display the other user's single-room office, a dialog box shown in Fig. 12 is displayed. Fig. 12 is a diagram showing the dialog box displayed when the user indicates the area to display the other user's single-room office. Here, by pointing to a visitation button 131, it is possible to visit the user's single-room office in a virtual manner.

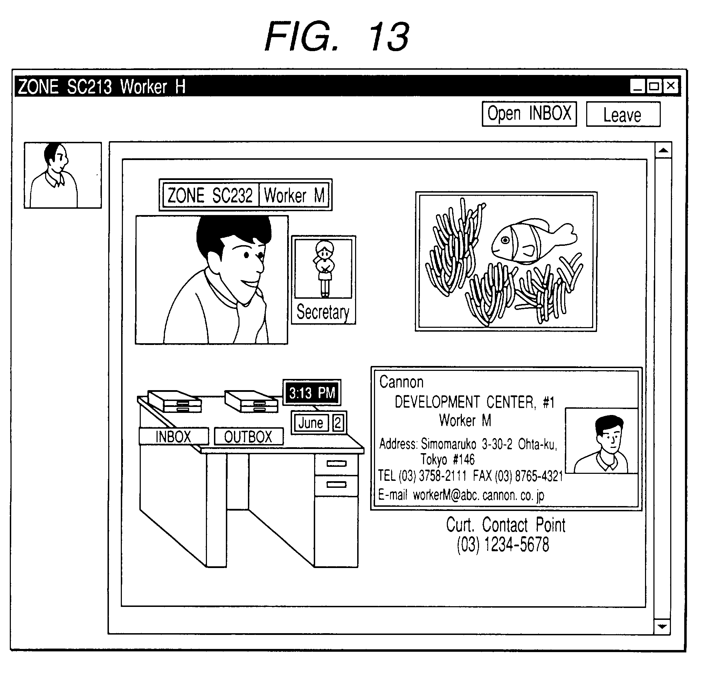

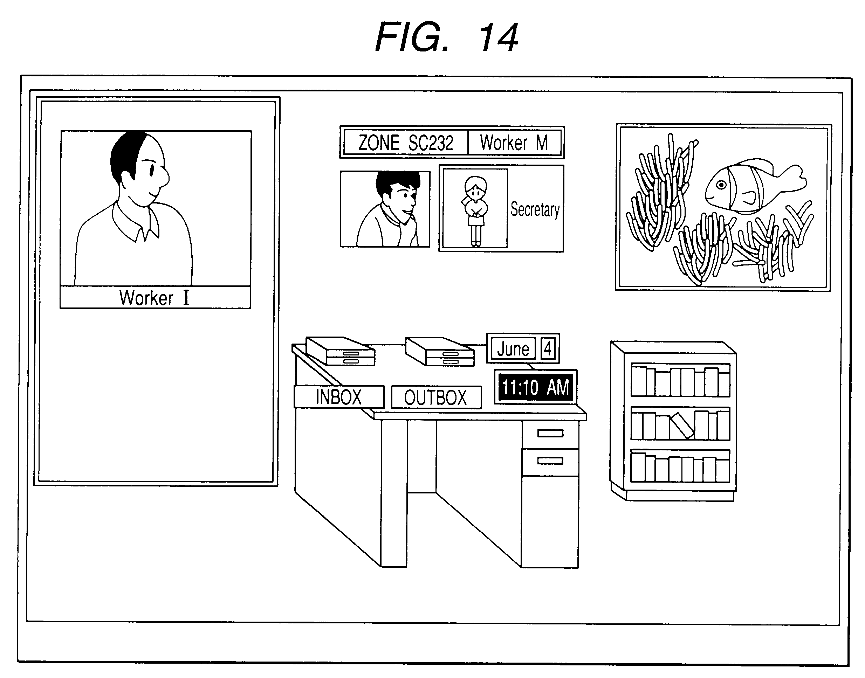

The visitation function can also be realized by pointing to a visitation button 96 of the control box 91. When the operation to visit the other user's single-room office is performed, a screen shown in Fig. 13 (personal view A) is displayed on the screen of the visitor's user terminal device, a screen shown in Fig. 14 (personal view B) is displayed on the screen of the user terminal device of a worker receiving the visitation, and the other user's working situation image is mutually displayed on the screen. Fig. 13 is a diagram showing the screen (personal view A) displayed on the screen of the visitor's user terminal device. Fig. 14 is a diagram showing the screen (personal view B) displayed on the screen of the visited worker's user terminal device.

The other user's image displayed in the personal view A or B is photographed by the camera disposed on the user terminal device, compressed/encoded as the compressed image of QCIF format (176 × 144 pixels) by the image compression/transmission program component of the program component part 73, and transferred to the host server device 11 via the signal conductor 74. By the operation of the server manager part 41, the transferred compressed image is directly transferred to the other user's user terminal device, and displayed on the screen of the personal view A or B. Therefore, since the compressed image is displayed in the single-room office area on the screen, the image is different from the reduced compressed image of 88 × 72 pixels which is reduced to the half both in vertical and transverse sizes using the compressed image reduction processing function software program disposed on the SPU 32.

Moreover, when the visitation operation is performed, telephone calls are made to the visitor's and visited worker's telephone sets by the call unit (CU) 33 disposed on the host server device 11. When both workers answer the telephone calls using the telephone sets, they can perform telephone communication via the CU 33.

Additionally, the phone numbers used by the CU 33 for making calls to both the workers are recorded as the personal profile information 17-16 of the database part 53 of the host server device 11.

As described above, in the visitation operation, the images with relatively high resolutions photographed from the video cameras of the visitor and visited worker are displayed. Additionally, the telephone communication can be realized, and the way of use in a television phone manner can be realized.

On the other hand, when only the voice communication is to be performed, instead of visitation, a telephone communication function can be used. In this case, after pointing to the other users' single-room office area, by pointing to a phone call button 132 of the displayed dialog box, or pointing to a phone call button 97 of the control box, in the same manner as in the visitation, calls are made to both the workers from the CU 33, so that the telephone communication can be performed between both the workers. When the telephone communication function is used, no image is exchanged between both the workers.

While the telephone communication is performed between both workers via the CU 33 by the visitation operation or the telephone communication, it is recorded in the personal profile information 17-16 of the database part 53 of the host server device 11 that the corresponding users are on the telephone. Then, based on the information, "on the phone" is automatically displayed in the working situation data display section 82 as the single-room office display of the corresponding user.

Each function processing operation for a certain user having a rest will next be described. As described above, in the mode of the distributed working, when the specific user temporarily leaves his seat to take a rest (e.g., for ten minutes), the fact is displayed on the screen of the other user's user terminal device, so that a wasteful operation of the other user's making a telephone call to the user having a rest with no answer can be prevented. In the embodiment, when the user has a rest during working, it can be displayed that the user has a rest in the following method on the screens of the user terminal devices of all the users.

Specifically, when the specific user takes a rest, by pointing to a suspend working button 93 of the control box 91 displayed on the user terminal device screen with the mouse 62, the mode can be shifted to a resting mode. Moreover, when the user desires to notify to the other users not only the fact that the user takes a rest but also reasons and related information (estimated time when the rest is finished), the message button 95 of the control box 91 is pointed to with the mouse 62 to display the dialog box shown in Fig. 10, and rest is selected from the stored message. Additionally, other message can be inputted. By the operation, the user shifts to the resting mode.

As described above, when the user shifts to the resting mode, the information indicating that the user is resting is transferred to the server manager part 41 of the host server device 11 from the Window/Dialog part 72 of the user terminal device software 19 via the server communication program component of the program component part 73.

The server manager part 41 records the information with rest start time information, and the like in diligent and negligent information database 17-18 of the database part 53 of the host server device 11, and quickly transmits the information indicating that the user is resting to the working situation data display program components and image extension display program components in the program component parts 73 of all the other user terminal devices.

Thereby, the working situation data display program component of each user terminal device displays the characters indicating that the user is resting, and if any, other related messages inputted by the resting user on the working situation data display section 82 as a part of the single-room office display on the screen of each user terminal device.

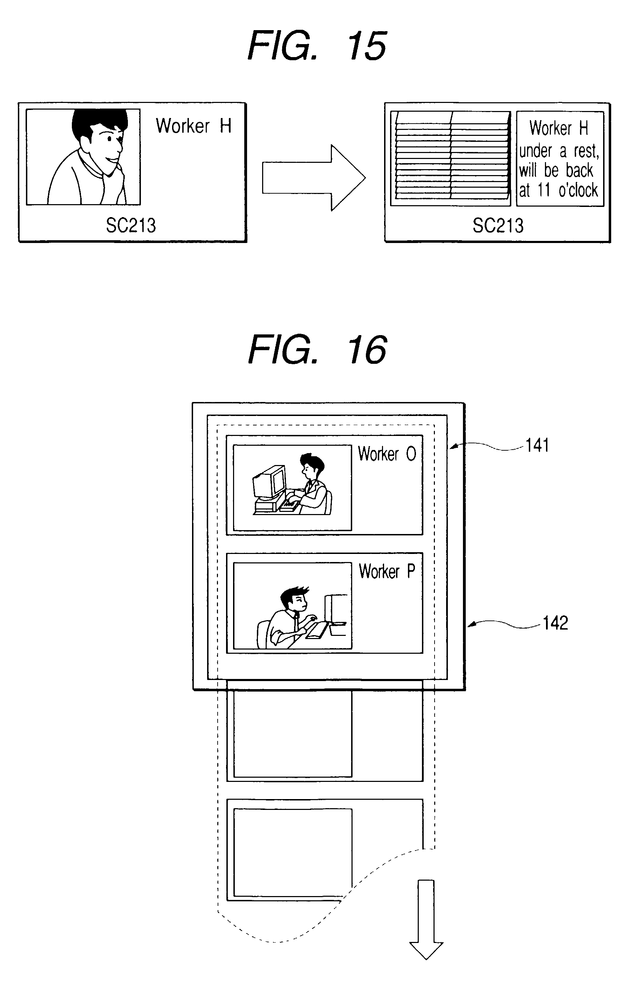

Additionally, the image extension display program component of each user terminal device stops the display of the working situation image as a part of the single-room office display on the screen of each user terminal device, and instead, displays a blind image as a still image registered beforehand in the image extension display program component. Fig. 15 is a diagram showing that the display of the working situation image is stopped and the blind image as the still image is displayed.

In the shift to the resting mode in the above-described method, the resting mode can be ended by operating the dialog box, thereby returning to the ordinary working (the character display indicating the resting mode and the blind image display are finished).

Here, the processing operation to take a rest during working has been described. When the user finishes the day's working and points to a finish working button 94 shown in Fig. 9, or when the user does not work at all for reasons such as holiday, in the same method as the above-described method, the image extension display program component of each user terminal device displays the blind image as the still image registered beforehand in the image extension display program component, in the working situation image display section as a part of the single-room office display on the screen of each user terminal device.

The processing operations of the portable user terminal device using a portable personal computer and the host server device will next be described. Here, examples of the portable personal computer include a notebook type personal computer on which Windows 95 (registered trademark of Microsoft Co., Ltd. in the U.S.) operates, and other personal computers in which the user terminal device software 19 can be executed, but which are not equipped with the cameras 65, 66 shown in Fig. 4. Additionally, they also include personal computers which are equipped with the cameras, but in which the cameras cannot be used because of a user's operation environment (mobile office) problem.

Since the user of the user terminal device cannot always photograph the working situation image, the user's face picture photographed beforehand and other images are stored in the personal profile information database 17-16 in the database part 53 of the host server device 11. Additionally, the information indicating that the user terminal device used by the user does not always transmit the image is registered in a client terminal profile information database 17-17 in the database part 53 of the host server device 11.

Thereby, the server manager part 41 of the host server device 11 does not receive the image from the corresponding user terminal device, and transmits the user's still image stored in the personal profile information database 17-16 and a part of the user terminal device profile information to all the user terminal devices.

The user terminal device of the other user displays the user's still image stored beforehand in the personal profile information database 17-16, in the area on the screen for displaying the image 81 of the user's working situation in the single-room office. Additionally, the functions other than the image display function are the same as those of the above-described ordinary user terminal device 15.

The processing operation to connect the general-purpose portable information terminal 24 to the host server device 11 will next be described. In the general-purpose portable information terminal herein, the user terminal device software 19 cannot be installed or executed, but the general-purpose Web browser is incorporated beforehand and operated.

The general-purpose Web browser can display HTML document, JPEG format image and GIF format image, or can input and transmit the document to HTML form. Moreover, among the apparatuses constituting the user terminal device shown in Fig. 4, the apparatuses corresponding to the cameras 65, 66 are not disposed. Even when the cameras are disposed, in general, they cannot be used because of the user's operation environment (mobile office) problem.

Since the user of the portable information terminal 24 cannot constantly photograph the working situation image in the same manner as the user of the portable user terminal device, the user's own face picture photographed beforehand is stored in the personal profile information database 17-16 in the database part 53 of the host server device 11.
Additionally, the information indicating that the user terminal device used by the user is the general-purpose portable information terminal 24 and that the constant image transmission is not performed is registered in the client terminal profile information database 17-17 in the database part 53 of the host server device 11.

Thereby, the server manager part 41 of the host server device 11 does not receive the image from the corresponding portable information terminal 24, and transmits the user's still image stored in the personal profile information database 17-16 and a part of the profile information of the user's portable information terminal 24 to all the user terminal devices. The user terminal device of the other user displays the user's still image stored beforehand in the personal profile information database 17-16, in the area on the screen for displaying the image 81 of the user's working situation in the single-room office.

Moreover, since the portable information terminal 24 cannot install or execute the user terminal device software 19, cannot utilize the program component part 73 included in the user terminal device software 19, or cannot display the other user's working situation image or character information as the working situation data on the screen of the portable information terminal 24, the host server device 11 processes and transmits the data to be transmitted to the portable information terminal 24 separately from the data to be transmitted to the ordinary user terminal device.

The outline of the processing operation of the portable information terminal 24 will be described. The general-purpose Web browser incorporated and operated in the portable information terminal 24 can display HTML document, JPEG format image and GIF format image, or can input and transmit the document to HTML form. Therefore, the host server device 11 processes the data to be transmitted to the user terminal device so that the data can be displayed/inputted with the general-purpose Web browser of the portable information terminal 24.

For example, with respect to the other user's working situation image, when the host server device 11 receives the image from the other user terminal device, the host server device 11 transfers the compressed image to the SPU 32 by the software operations of the server manager part 41, SPU access library part 43 and driver part 45.

The SPU 32 performs an image processing to convert the compressed image to JPEG or GIF format, and transfers the converted image to the active Web server part 49 via the server manager part 41. In addition to the transferred converted image, the active Web server part 49 reconstitutes the data to be displayed on the screen of the portable information terminal 24 (including the character information as the user's working situation data, and various diagram images to be displayed in the single-room office area and the common space area) into an optimized mode in accordance with the profile of the portable information terminal 24 being used by the user (the information concerning the terminal function and operation such as the screen size and resolution of Web browser, the details of image display ability including the number of colors and white/black, and the processing speed and maximum communication speed) to generate the reconstituted Web document (including HTML document, image, and the like), and transmits the document to the portable information terminal 24.

Additionally, there are a plurality of types of the portable information terminals 24 which are different in maker, machine type, and the like, and these profile information can be mixed and accommodated in the host server device at the same time. The profile information of various portable information terminals 24 are stored beforehand in the client terminal profile information database 17-17 of Fig. 8 by the manager of the host server device.

The personal profile information 17-16 is linked with the client terminal profile information 17-17, and stores the information concerning the user and type of the portable information terminal 24. Therefore, usually, when a certain user connects the portable information terminal 24 to the host server device 11, the user inputs the user ID. The operation allows the host server device 11 to specify both the user and machine type of the portable information terminal 24.

The active Web server part 49 reconstitutes the mode suitable for the display of the portable information terminal 24 to be used by the user based on the profile information of the portable information terminal 24. Moreover, the information inputted by the user of the portable information terminal 24, for example, reasons for the rest, the input of the message and the designation of various functions, and the like are processed on the general-purpose Web browser. Since the information is transmitted to the host server device 11 from the portable information terminal 24, the user of the portable information terminal 24 can also use many of the functions which can be used by the user of the ordinary user terminal device.

However, since the Web browser of the portable information terminal 24 has a small screen display size, the user needs to frequently perform a scroll operation. Here, the active Web server part 49 refers to the profile of the portable information terminal 24 to be used by the user, and reconstitutes and transmits the screen display so that all displays/functions can be realized only by direction scroll (vertical or transverse scroll). Therefore, the user can use the necessary function only by operating one-direction scroll, and the deterioration of the user operation property is minimized.

Fig. 16 is a diagram showing the screen display of the portable information terminal 24, and two single-room offices 141 are vertically displayed on the screen. When the user operates the vertical scroll of the portable information terminal 24, the entire display including the single-room office area and the common space area can be viewed. In the drawing, numeral 142 denotes a section appearing on the screen by the scroll operation.

The processing operation to input the working situation data from the telephone (including the cellular phone) will next be described. As shown in Fig. 1, in principle, the user possesses and uses the telephone set in addition to the user terminal device, portable user terminal device or portable information terminal. By the calls made from the call unit (CU) 33 of the host server device 11, telephone communication can be performed between two users. When the user works in the mobile office 16 or 17, however, it is general to use the cellular phone (including an automobile phone, simple cellular phone, and other mobile communicators).

The user working in the mobile office usually possesses either the portable user terminal device or the portable information terminal, which is connected to the host server device 11 for use, so that the user working situation data can be changed by operating the terminal device. However, for example, when the user of the mobile office takes a rest from a certain time, it is troublesome in some cases to take out of a bag and operate the portable user terminal device or the portable information terminal 24 during transferring by the public transportation facilities or in the crowd.

In this case, the user uses the cellular phone which is more easily taken and operated, makes a call to the phone number of the subscriber telephone channel connected to the CU 33 of the host server device 11, and connects to an unused telephone channel port of the CU 33, so that a second dial tone voice is transmitted to the cellular phone from the CU 33.

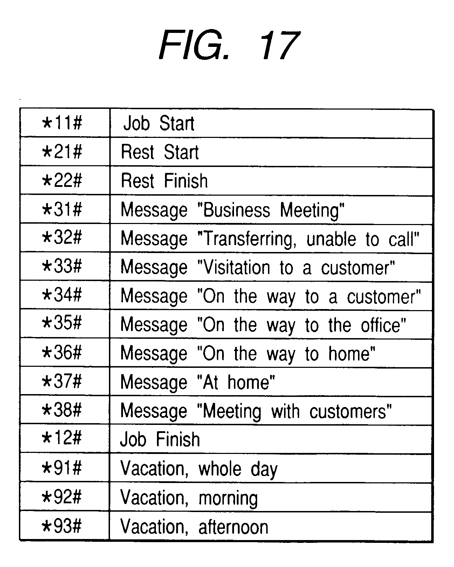

Fig. 17 is a diagram showing the content of the second dial tone voice. After confirming the second dial tone voice, the user inputs each command shown in Fig. 17 via the dial key of the cellular phone. Thereby, DTMF signal responding to the inputted dial key is decoded by DTMF receiver disposed on the CU 33, and the diligent and negligent information database 17-18 in the database part 53 is updated by the software operations of the server manager part 41, CU access library part 42, and driver part 45. Furthermore, the display of the working situation data display section 82 on the user's single-room office on the screen of each user's user terminal device is also updated.

The processing operation concerning working management melody will next be described. The host server device 11 stores the time preset as a user's standard working time in a standard working time information database 17-19 of the database part 53. For an ordinary working user, examples of the time include work start time, lunch break start time, lunch break end time, work end time, and the like. For a flextime working user, the examples include core time start time, core time end time, and the like.

The host server device 11 stores the information as to whether each user is an ordinary worker, a flextime worker, or a worker of a special working mode in the personal profile information database 17-16. For example, for the user terminal device used by the ordinary working user, at each time such as the work start time, a working melody ringing instruction is transmitted to a melody ringing program component of the program component part 73 of the user terminal device from the server manager part 41. Thereby, each user's user terminal device uses an attached sound source device to send a working melody sound to each user.

As described above, even the distributed working worker can work in the working time system in which regulations are valued in accordance with the necessity of the belonging organization body. Moreover, a distributed working problem that there is a high probability that the worker forgets the work end time and tends to overwork can be avoided.

The processing operation concerning a rest promoting melody will next be described. The host server device 11 stores beforehand the information concerning a concrete time or a rest interval time which is determined by the office manager to urge the worker to rest, in a standard rest time information database 17-22 of the database part 53. The information relates to the time, for example, the concrete time such as 10:00 a.m. and 3:00 p.m., every one hour after the worker's working start time, and the like.

The host server device 11 transmits a rest promoting melody ringing instruction to the melody ringing program component of the program component part 73 of the user terminal device from the server manager part 41 in each timing designated by the standard rest time information database 17-22. Thereby, each user's user terminal device uses the attached sound source device to send a rest promoting melody sound to each user.

Additionally, the rest promoting melody sound is a simple and short-time melody sound such as chime to urge the worker to rest. Instead of this, radio exercise music, recovery exercise guidance voice, and the like may be emitted in order to urge the rest more strongly.

It is known that since it is more difficult to obtain a timing to acquire a rest in the conventional working at home than the ordinary office work, physical fatigue is more intense. However, when the melody urging the rest is automatically sent as described above, even the distributed working worker can easily obtain the timing to get a rest, thereby avoiding the problem of fatigue increase.

### [Second Embodiment]

In the first embodiment, the image photographed by the user terminal device is compressed/encoded as the compressed image of QCIF format (176 × 144 pixels). Upon reception of the compressed image, the host server device 11 transfers the image to the SPU 32 by the software operations of the server manager part 41, SPU access library part 43 and driver part 45. The SPU 32 performs the image processing to reduce the compressed image to the half in both the vertical and transverse sizes, generates a reduced compressed image of 88 × 72 pixels, and transmits the reduced compressed image to all the user terminal devices other than the user terminal device which has photographed the image via the server manager part 41. In the second embodiment, the host server device 11 is not provided with the SPU 32 or the software for the processing operation, and the server manager part 41 may perform a processing to transmit the compressed image received from each user terminal device to the other user terminal device as it is.

In this case, when the user terminal device uses the image extension display program component of the program component part 73 to display the received compressed image as the working situation image of the single-room office on the screen, the size is reduced so as to be adaptable to the layout of the screen display, before displaying the image. In this case, however, the effect of raising the frame rate to the high rate described in the first embodiment cannot be obtained.

In the above-described embodiments of the present invention, the worker's user terminal device is realized by combining three types of apparatuses of the personal computer 18, user terminal device software 19 and telephone set 20 and other apparatuses, but the present invention is not limited to the embodiments. Other embodiments may be implemented by using, instead of the personal computer 18, an exclusive computer terminal for connection to Internet, an exclusive computer terminal for games, a television image receiver incorporating Internet connecting function, a television image receiver incorporating a game function, a communication channel connecting terminal adapter, a cable television channel connecting cable modem, a multifunctional telephone set incorporating Internet connecting function, various household electric appliances incorporating Internet connecting functions (e.g., a refrigerator incorporating Internet connecting function), and other various electronic terminal apparatuses in which stored programs can be controlled. In this case, the user terminal device software 19 is transplanted in an executable format in each terminal, and the operation equal to that of the embodiment can be performed.

## Claims

1. A distributed office system provided with terminal devices installed for a plurality of users, and a server device connected to the terminal devices via a communication channel, for displaying information on a screen of a terminal device of each of the users, the information relating to the other users of said each user, comprising:
working situation display means for collectively displaying an information aggregate including at least three types of information including an other user's working situation image, character information concerning an other user's working situation, and a diagram image indicating an other user's virtual single-room office as said information concerning the other user on the screen of the terminal device of said user.

2. The distributed office system according to claim 1, wherein the working situation display means displays information concerning the plurality of users including the user himself and the other users in a virtual office area disposed on said screen.

3. The distributed office system according to claim 2, wherein selecting of the user to be displayed in said virtual office area, and changing of arrangement of a display position of the information concerning the user are performed by a specific user.

4. The distributed office system according to claim 2, wherein said working situation display means displays a virtual user common space area including a meeting room, a training room, a data room, and a lounge with said virtual office area on the screen of said terminal device.

5. The distributed office system according to claim 1, wherein said character information concerning the working situation includes at least one of user's name, a current working situation, an operation content, a reason why the user is not working, a place where the user is, and a future working schedule.

6. The distributed office system according to claim 1, wherein when telephone communication is performed via a telephone channel board disposed in said server device, the working situation display means displays character information indicating that the user is on the telephone as said character information concerning the other user's working situation.

7. The distributed office system according to claim 1, wherein when said other user is resting, said working situation display means does not display said other user's working situation image, and displays an image indicating that said other user is resting.

8. The distributed office system according to claim 1, further comprising:
selecting means for selecting said other user's virtual single-room office on said screen;
visitation input means for inputting visitation to said selected other user's virtual single-room office; and
virtual single-room office display means for, when said visitation is inputted, displaying the inside of the virtual single-room office of a visited user on the screen of the terminal device of a visitor, wherein
the screen in which the inside of the virtual single-room office of said visited user is displayed includes a visited user's working situation image, and a diagram image meaning fittings or fixtures of the visited user.

9. The distributed office system according to claim 1, further comprising:
selecting means for selecting said other user's virtual single-room office on said screen;
visitation input means for inputting visitation to said selected other user's virtual single-room office; and
office display means for, when said visitation is inputted, displaying the inside of the virtual single-room office of a visitor on the screen of the terminal device of a visited user, wherein
the screen in which the inside of the virtual single-room office of said visitor is displayed includes a visitor's working situation image, a diagram image meaning visitor's fittings or fixtures, and a diagram image indicating an entrance door to the office, and said visitor's working situation image is displayed in a window portion of the door.

10. The distributed office system according to claim 1, further comprising:
selecting means for selecting said other user's virtual single-room office on said screen;
input means for inputting visitation or telephone to said selected other user's virtual single-room office; and
telephone communication means by which when the visitation or the telephone to said other user's virtual single-room office is inputted, said server device makes telephone calls to telephone subscriber numbers registered beforehand of both the users via a telephone channel board, so that telephone communication can be realized between the users.

11. The distributed office system according to claim 1, wherein said terminal device comprises:
cameras for photographing users' images;
converting means for converting the users' images photographed by the cameras to compressed images with a predetermined number of pixels; and
transmitting means for transmitting the converted images to said server device,
said server device comprises:
generating means for generating a reduced compressed image by reducing the number of pixels of the received image; and
transmitting means for transmitting the generated reduced compressed images to said terminal device, and
said transmitted reduced compressed images are displayed in the screens of said terminal device as said other users' working situation images.

12. The distributed office system according to claim 8, wherein said terminal device comprises:
camera for photographing users' images;
converting means for converting the users' images photographed by the camera to compressed images with a predetermined number of pixels; and
transmitting means for transmitting the converted image to said server device, and
said server device comprises:
transmitting means for transmitting the compressed image of the visited user to the visitor's terminal device.

13. The distributed office system according to claim 9, wherein said terminal device comprises:
cameras for photographing users' images;
converting means for converting the users' images photographed by the camera to compressed images with a predetermined number of pixels; and
transmitting means for transmitting the converted image to said server device, and
said server device comprises:
transmitting means for transmitting the compressed image of the visited user to the visitor's terminal device.

14. The distributed office system according to claim 1, wherein when the working situation image of the other user using a portable terminal device having no camera as said terminal device is displayed, said working situation display means displays a user's image registered beforehand in said server device.

15. The distributed office system according to claim 1, wherein said working situation display means comprises setting means for setting a frame rate by a user's operation when said other user's working situation image photographed by a camera disposed on the terminal device is received and displayed.

16. The distributed office system according to claim 3, further comprising:
indicating means for indicating an organization on the screen in which the virtual single-room offices of the users belonging to the same organization are displayed in the same virtual office area; and
moving means for moving said screen to the virtual office area of the different organization in accordance with the indication.

17. The distributed office system according to claim 14, further comprising:
referring means for referring to profile concerning a screen display ability of a portable information terminal registered in said server device;
generating means for generating optimum display data for screen display of said portable information terminal by said server device; and
transmitting means for transmitting the generated display data to said portable information terminal, wherein
said portable information terminal displays images of the virtual single-room office, a virtual office area and a user common space area in accordance with said received display data.

18. The distributed office system according to claim 1, wherein said character information concerning the working situation is inputted by a telephone set ten key, in addition to by said terminal device.

19. The distributed office system according to claim 1, wherein said server device comprises:
time setting means for setting a user's standard working time; and
sound instruction sending means for sending an instruction for melody sound to said terminal device, and
said terminal device comprises:
a sound source device; and
ringing means for receiving said sent instruction for the melody sound to ring the melody sound at a work start time, a lunch break start time, a lunch break end time, a work end time, and a core time end time for an ordinary working user.

20. The distributed office system according to claim 1, wherein said server device comprises:
setting means for setting a user's standard rest time or a rest interval time; and
sound instruction sending means for sending an instruction for melody sound to said terminal device, and
said terminal device comprises:
a sound source device; and
ringing means for receiving said sent instruction for the melody sound to ring a rest promoting melody sound for urging a worker's rest.

21. A method of managing a distributed office system provided with terminal devices installed for a plurality of users, and a server device connected to the terminal devices via a communication channel for displaying information concerning the other user on a screen of the terminal device of said user in the distributed office system, comprising the steps of:
collectively displaying an information aggregate of at least three types of information including an other user's working situation image, character information concerning the other user's working situation, and a diagram image indicating an other user's virtual single-room office as said information concerning the other user on the screen of the terminal device of said user.

22. The distributed office system managing method according to claim 21, wherein the step of displaying said information concerning the other user's working situation comprises displaying the information concerning the plurality of users including the user himself and the other user in a virtual office area disposed on said screen.

23. The distributed office system managing method according to claim 22, wherein selecting of the user to be displayed in said virtual office area, and changing of arrangement of a display position of the information concerning the user are performed by a specific user.

24. The distributed office system managing method according to claim 22, wherein said step of displaying said information concerning the other user's working situation comprises displaying a virtual user common space area including a meeting room, a training room, a data room, or a lounge with said virtual office area on the screen of said terminal device.

25. The distributed office system managing method according to claim 21, wherein said character information concerning the working situation includes at least one of a user's name, a present working situation and an operation content, a reason why the user is not working and a place where the user is, and a future working schedule.

26. The distributed office system managing method according to claim 21, wherein when telephone communication is performed via a telephone channel board disposed in said server device, said step of displaying said information concerning the other user's working situation comprises displaying character information indicating that the user is on the telephone as said character information concerning the other user's working situation.

27. The distributed office system managing method according to claim 21, wherein said step of displaying said information concerning the other user's working situation comprises, when said other user is resting, not displaying said other user's working situation image, and displaying an image indicating that said other user is resting.

28. The distributed office system managing method according to claim 21, further comprising the steps of:
selecting said other user's virtual single-room office on said screen;
inputting visitation to said selected other user's virtual single-room office; and
when said visitation is inputted, displaying the inside of the virtual single-room office of a visited user on the screen of the terminal device of a visitor, wherein
the screen in which the inside of the virtual single-room office of said visited user is displayed includes a visited user's working situation image, and a diagram image meaning fittings or fixtures of the visited user.

29. The distributed office system managing method according to claim 21, further comprising the steps of:
selecting said other user's virtual single-room office on said screen;
inputting visitation to said selected other user's virtual single-room office; and
when said visitation is inputted, displaying the inside of the virtual single-room office of a visitor on the screen of the terminal device of a visited user, wherein
the screen in which the inside of the virtual single-room office of said visitor is displayed includes a visitor's working situation image, a diagram image meaning visitor's fittings or fixtures, and a diagram image indicating an entrance door to the office, and said visitor's working situation image is displayed in a window portion of the door.

30. The distributed office system managing method according to claim 21, further comprising the steps of:
selecting said other user's virtual single-room office on said screen;
inputting visitation or telephone to said selected other user's virtual single-room office; and
when the visitation or the telephone to said other user's virtual single-room office is inputted, making telephone calls to telephone subscriber numbers registered beforehand of both the users via a telephone channel board by said server device, so that telephone communication can be realized between the users.

31. The distributed office system managing method according to claim 21, further comprising the steps of :
converting a user's image photographed by a camera disposed on said terminal device to a compressed image with a predetermined number of pixels; and
transmitting the converted image to said server device;
generating a reduced compressed image by reducing the number of pixels of the received image by said server device;
transmitting the generated reduced compressed image to said terminal device; and
displaying said transmitted reduced compressed image as said other user's working situation image in the screen of said terminal device.

32. The distributed office system managing method according to claim 28, further comprising the steps of:
converting a user's image photographed by a camera disposed on said terminal device to a compressed image with a predetermined number of pixels;
transmitting the converted image to said server device; and
transmitting the compressed image of the visited user to the visitor's terminal device by said server device.

33. The distributed office system managing method according to claim 29, further comprising the steps of:
converting a user's image photographed by a camera disposed on said terminal device to a compressed image with a predetermined number of pixels;
transmitting the converted image to said server device; and
transmitting the compressed image of the visited user to the visitor's terminal device by said server device.

34. The distributed office system managing method according to claim 21, wherein when the working situation image of the other user using a portable terminal device having no camera as said terminal device is displayed, said step of displaying said information concerning the other user's working situation comprises displaying a user's image registered beforehand in said server device.

35. The distributed office system managing method according to claim 21, wherein said step of displaying said information concerning the other user's working situation comprises the steps of: receiving said other user's working situation image photographed by a camera disposed on the terminal device; and displaying the image in a frame rate set by a user's operation.

36. The distributed office system managing method according to claim 23, further comprising the steps of:
indicating an organization on the screen on which the virtual single-room offices of the users belonging to the same organization are displayed in the same virtual office area; and
moving said screen to the virtual office area of the different organization in accordance with the indication.

37. The distributed office system managing method according to claim 34, further comprising the steps of:
referring to profile concerning a screen display ability of a portable information terminal registered in said server device;
generating optimum display data for screen display of said portable information terminal by said server device; and
transmitting the generated display data to said portable information terminal, wherein
said portable information terminal displays images of the virtual single-room office, a virtual office area and a user common space area in accordance with said received display data.

38. The distributed office system managing method according to claim 21, wherein said character information concerning the working situation is inputted by a telephone set ten key, in addition to by said terminal device.

39. The distributed office system managing method according to claim 21, comprising the steps of:
setting a user's standard working time by said server device;
sending an instruction for melody sound to said terminal device, and
receiving said sent instruction for the melody sound by said terminal device to ring by an attached sound source device the melody sound at a work start time, a lunch break start time, a lunch break end time, a work end time, and a core time end time for an ordinary working user.

40. The distributed office system managing method according to claim 21, comprising the steps of:
setting a user's standard rest time or a rest interval time by said server device;
sending an instruction for melody sound to said terminal device; and
receiving said sent instruction for the melody sound by said terminal device to ring a rest promoting melody sound for urging a worker's rest by an attached sound source device.

41. A distributed office system comprising a plurality of user stations (13, 14, 15, 16, 17) connected to exchange data, wherein each user station is operable to process received data to display and update images containing:
an image (81) comprising image data from at least one camera in the working area of a user at a connected user station;
information (82) representing a current or future working situation of a user at a connected user station; and
a diagrammatic image (83) representing a state of the working area of a user at a connected user station.

42. A system according to claim 41, wherein each user station is operable to process received data to display and update images in a predetermined display area (84) containing:
an image (81) comprising image data from at least one camera in the working area of each user station;
information (82) representing a current or future working situation of each user; and
a diagrammatic image (83) representing a state of the working area of each user at each user station.

43. A system according to claim 42, wherein each user station is arranged to process received data to display the images in the predetermined display area (84) such that the display is the same at each user station.

44. A system according to any of claims 41 to 43, wherein the user stations are connected via a server to exchange data.

45. Processing apparatus (19, 61) for use in a system according to claim 41, comprising means for receiving data from user stations when connected thereto and means for generating in response thereto image data for display comprising:
image data defining an image (81) comprising image data from at least one camera in the working area of a user at a connected user station;
image data defining information (82) representing a current or future working situation of a user at a connected user station; and
image data defining a diagrammatic image (83) representing a state of the working area of a user at a connected user station.

46. A storage device storing instructions for causing a programmable processing apparatus to become operable to process data from user stations when connected thereto to generate image data for display comprising:
image data defining an image (81) comprising image data from at least one camera in the working area of a user at a connected user station;
image data defining information (82) representing a current or future working situation of a user at a connected user station; and
image data defining a diagrammatic image (83) representing a state of the working area of a user at a connected user station.

47. A signal conveying instructions for causing a programmable processing apparatus to become operable to process data from user stations when connected thereto to generate image data for display comprising:
image data defining an image (81) comprising image data from at least one camera in the working area of a user at a connected user station;
image data defining information (82) representing a current or future working situation of a user at a connected user station; and
image data defining a diagrammatic image (83) representing a state of the working area of a user at a connected user station.
